# EUROPEAN PATENT APPLICATION

(11) **EP 0 862 338 A2**
(43) Date of publication of application: **02.09.1998**
(21) Application number: 98301383.0
(22) Date of filing: 25.02.1998
(51) Int. Cl.: H04N 9/83

(54) **Chroma signal recording circuit**

(30) Priority: 27.02.1997 JP 44055/97
(71) Applicant: SANYO ELECTRIC Co., Ltd., Moriguchi-shi, Osaka 570 (JP)
(72) Inventor: Iizuka, Hiroshi, Oura-gun, Gunma (JP)
(74) Representative: Cross, Rupert Edward Blount

(57) **Abstract**

A chroma signal recording circuit, which oscillates a voltage control oscillator (12) in synchronization with the phase of a burst signal contained in a PAL recording chroma signal and records the chroma signal according to an oscillation output signal of the voltage control oscillator, comprises a burst gate circuit (11) which extracts the burst signal from the recording chroma signal; a voltage control oscillator (12) which oscillates with a frequency that is an integral multiple of the frequency of the burst signal as a central frequency; an APC detection circuit (13) which compares the phase of the oscillation output signal from the voltage control oscillator with that of the burst signal from the burst gate circuit, and controls an oscillation frequency of the voltage control oscillator according to the phase difference obtained; and a control circuit (17) which controls to apply the output signal from the APC detection circuit in two horizontal synchronizing signal cycles. Accordingly, an APC loop operates on the burst signal of either phase only, so that PM and AM characteristics of the chroma signal to be recorded can be improved using a circuit of simple configuration.

## Description

### BACKGROUND OF THE INVENTION

### FIELD OF THE INVENTION

The invention relates to a chroma signal recording circuit for a PAL system home VCR, and more particularly to a chroma signal recording circuit having improved PM (phase modulation) and AM (amplitude modulation) characteristics of a chroma signal to be recorded by improving an APC (automatic phase control) loop contained in the chroma signal recording circuit.

### DESCRIPTION OF THE RELATED ART

A PAL TV broadcast signal inverts an R-Y component of a color difference signal every 1H (horizontal synchronizing signal period), making it difficult to visually detect distortion of a signal generated in a transmission system. A burst signal has the phase switched to +45 degrees and -45 degrees every 1H to identify the polarity of the R-Y component.

Home VCRs record a video signal with the frequency of a chroma signal transformed. Transformation of the frequency requires a VXO (voltage controlling oscillator having quartz as the oscillator) which oscillates in synchronization with the phase of the burst signal in the recorded chroma signal. The VXO must synchronize phase with the burst signal which inverts every 1H in order to record a PAL TV broadcast signal.

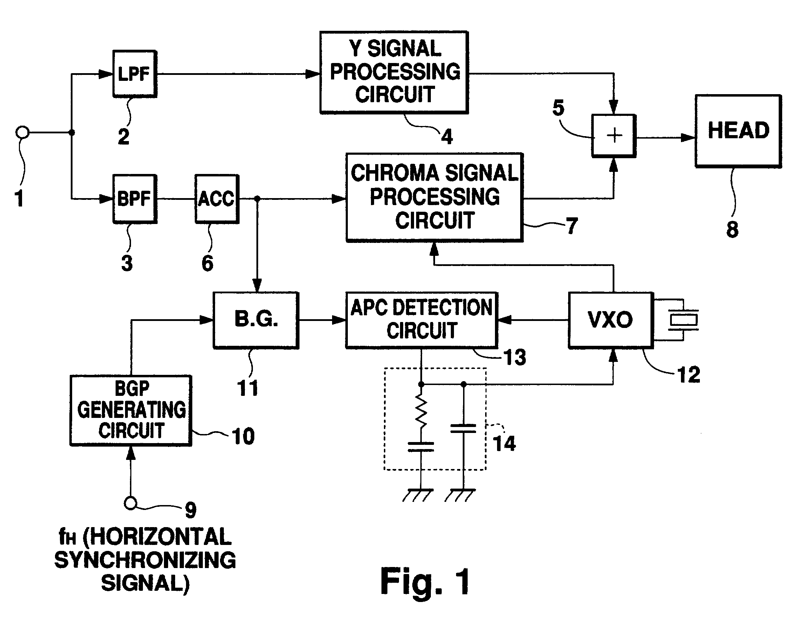

Fig. 1 shows a circuit for recording such a PAL video signal. The PAL video signal is supplied to an input terminal 1 in Fig. 1. An LPF 2 extracts only a luminance signal component from the video signal, while a BPF 3 extracts only a chroma signal component (color signal component) from the video signal.

The luminance signal component from the LPF 2 is subjected to FM and other modulation required for recording by a luminance signal processing circuit 4. The output signal from the luminance signal processing circuit 4 is applied to an adder circuit 5.

The chroma signal component from the BPF 3 is adjusted to a given level by an ACC circuit 6. The output signal from the ACC circuit 6 is subjected to frequency conversion or the like required for recording by a chroma signal processing circuit 7. The output signal from the chroma signal processing circuit 7 is also applied to the adder circuit 5 and added to the output signal from the luminance signal processing circuit 4. The resulting signal is supplied to VCR head 8.

The operation of an APC loop within the chroma signal processing circuit 7 will next be described. A horizontal synchronizing signal is applied from the luminance signal processing circuit 4 to a terminal 9. A BGP (burst gate pulse) generating circuit 10 generates a BGP according to the horizontal synchronizing signal. The chroma signal is applied from the ACC circuit 6 to a burst gate circuit 11 to generate an output signal for only a BGP period during which the BGP is applied.

Accordingly, a burst signal is generated from the burst gate circuit 11 in a cycle of 1H.

Meanwhile, a VXO 12 oscillates at a burst signal frequency and applies a continuous wave to an APC detection circuit 13. The APC detection circuit 13 generates a detection output signal only when it receives the burst signal. The detection output signal is smoothed and converted to a DC voltage by a smoothing circuit 14 and applied to the VXO 12. The VXO 12 then oscillates in synchronization with the phase of the burst signal to be recorded. The oscillation output signal of the VXO 12 can thereby be used for the frequency conversion by the chroma signal processing circuit 7.

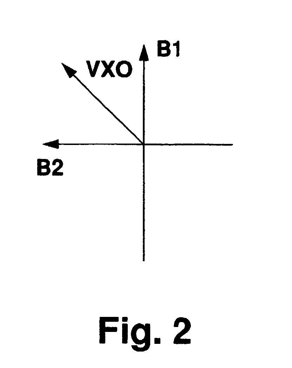

The VXO 12 shown in Fig. 1 is controlled by an average value of the detection output signals over an extended period by the smoothing circuit 14. Fig. 2 is a vector diagram showing the phase relationship between the oscillation output signal of the VXO 12 in a stable state and the burst signal from the burst gate circuit 11. In Fig. 2, B1 and B2 denote first and second burst signals, respectively. B1 and B2 are applied to the APC detection circuit 13 every 1H. Meanwhile, the oscillation output signal (VXO) of the VXO 12, which is a single continuous wave, is finally positioned in the phase at the midpoint between B1 and B2 as a result of the APC's operation.

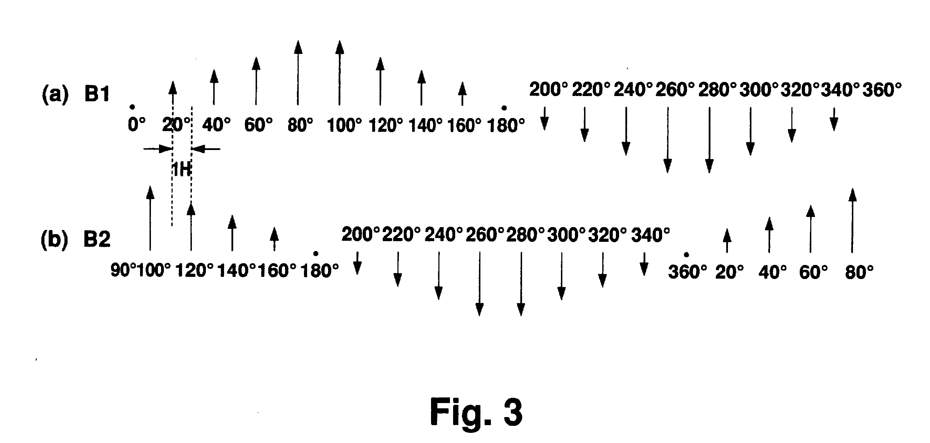

Fig. 3 shows vectors of APC error output signals of B1 and B2 with time given on the horizontal axis. A (a) in Fig. 3 indicates B1 and a (b) in Fig. 3 indicates B2. It is assumed that the initial phase of the oscillation output signal of the VXO 12 coincides with that of B1 and shifts by 10 degrees every 1H because of a frequency difference. A first signal B1 has a phase difference of zero degree with respect to the oscillation output signal. B2 comes in the next 1H, and has a phase difference of 90+10, or 100 degrees. B1 then comes in the next 1H, and it has a phase difference of 0+20, or 20 degrees. The next phase difference becomes 90 degrees + 30 degrees equal to 120 degrees. Thus, the APC error output signal is indicated as the vectors of (a) and (b) in Fig. 3. The vectors of (a) and (b) in Fig. 3 are added by the smoothing circuit 14 to control the oscillation output signal of the VXO 12 by the average value.

However, when the vectors of (a) and (b) in Fig. 3 are used for control, there is a disadvantage that PM (phase modulation) and AM (amplitude modulation) characteristics of the record chroma signal are degraded because the VXO 12 is controlled on the phase axis different by 90 degrees every 1H.

### SUMMARY OF THE INVENTION

The invention can be applied to a PAL video signal processing device and aims to improve the PM and AM characteristics of a chroma signal to be recorded.

The invention was achieved to complete the above object and relates to a chroma signal recording circuit for oscillating a voltage control oscillator in synchronization with the phase of a burst signal contained in a chroma signal of a PAL video signal and recording the chroma signal according to an oscillation output signal of the voltage control oscillator, which comprises a burst gate circuit which extracts the burst signal from the chroma signal of the video signal; a voltage control oscillator which oscillates with a frequency that is an integral multiple of the frequency of the burst signal as a central frequency; an APC detection circuit which compares the phase of the oscillation output signal outputted from the voltage control oscillator with that of the burst signal outputted from the burst gate circuit and controls an oscillation frequency of the voltage control oscillator according to the phase difference obtained; and a control circuit which generates the output signal from the APC detection circuit in two horizontal synchronizing signal cycles.

In a chroma signal recording circuit according to the invention, the control circuit can control the burst signal, which is outputted from the burst gate circuit to the APC detection circuit, to two horizontal synchronizing signal cycles.

In such a chroma signal recording circuit according to the invention, the control circuit can comprise a frequency dividing circuit which performs 1/2 frequency division of a horizontal synchronizing signal; a delay circuit which delays the frequency-divided signal from the frequency dividing circuit by time corresponding to the duration from a start position of the horizontal synchronizing signal to a starting position of the burst signal superimposed; and a gate pulse generating circuit which produces, from the frequency-divided signal delayed by the delay circuit, a gate pulse signal for allowing the output from the APC detection circuit or the output of the burst signal from the burst gate circuit in two horizontal synchronizing signal cycles.

The gate pulse generating circuit can be a multi-vibrator.

By using a configuring as described above, an APC loop formed in the chroma signal recording circuit operates on only one of the two burst signals of different phases. Therefore, a system in that the chroma signal is recorded with its frequency converted on the basis of the oscillation output signal output from the voltage control oscillator can improve the PM and AM characteristics of the chroma signal to be recorded.

Such a process can be made by thinning either burst signal, while the number of components configuring the circuit which performs the pertinent processing does not significantly increase.

### BRIEF DESCRIPTION OF THE DRAWINGS

Fig. 1 is a circuit diagram showing a conventional chroma signal memory circuit.

Fig. 2 is a vector diagram showing the phase relationship between an oscillation output signal of VXO and a burst signal of a burst gate circuit in the circuit shown in Fig. 1.

Fig. 3 is a vector diagram showing an APC error output signal with respect to first and second burst signals.

Fig. 4 is a circuit diagram showing a chroma signal recording circuit according to an embodiment of the invention.

Fig. 5 is a diagram showing signal waveforms in the circuit shown in Fig. 4.

Fig. 6 is a diagram showing signal waveforms in the circuit shown in Fig. 4.

### DESCRIPTION OF THE PREFERRED EMBODIMENT

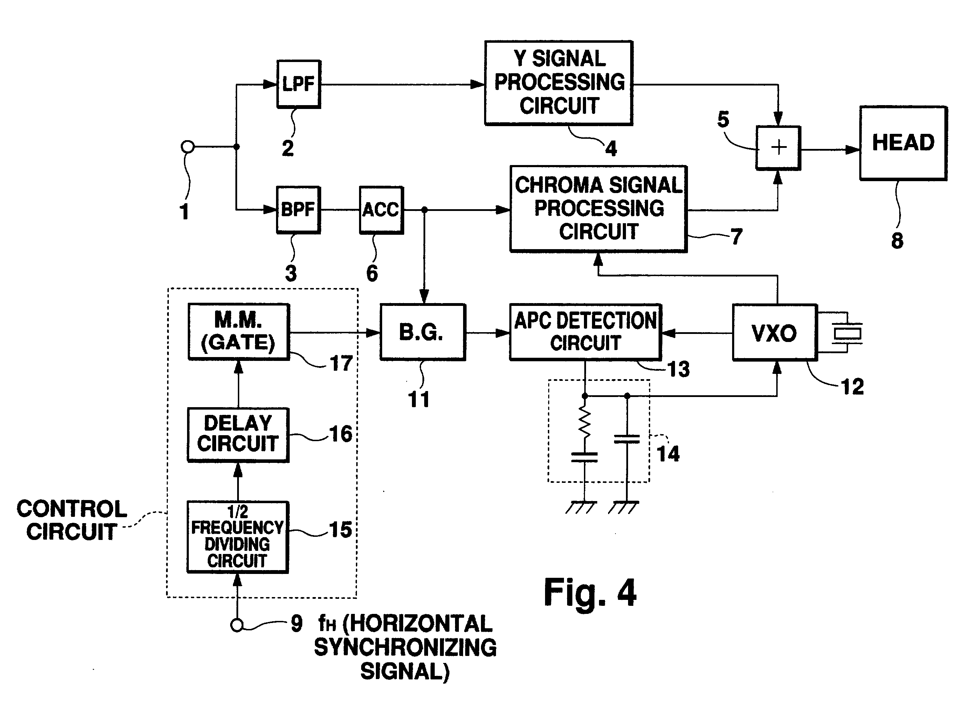

Fig. 4 shows a chroma signal recording circuit according to one embodiment of the present invention. Reference numeral 15 denotes a 1/2 frequency dividing circuit for performing frequency division of a horizontal synchronizing signal from a terminal 9, 16 a delay circuit for delaying the 1/2 frequency-divided output signal, and 17 indicates a mono-multi (multi-vibrator) for generating a pulse with a given width according to a leading edge of the output signal of the delay circuit 16. The 1/2 frequency dividing circuit 15, the delay circuit 16 and the mono-multi 17 operate as control circuits to apply the output signal of an APC detection circuit 13 in two horizontal synchronizing signal cycles.

It is to be understood that the same reference numerals are used to designate corresponding parts in Fig. 1 and Fig. 4, and their description is not repeated.

In this embodiment of the invention, the output signal of the APC detection circuit 13 is generated in two horizontal synchronizing signal cycles. Specifically, a burst signal to be supplied from a burst gate circuit 11 to the APC detection circuit 13 is determined to be B1 or B2 by thinning either burst B1 or B2, and VXO 12 is controlled according to a result of the APC detection by either burst. Since the PAL system uses two types of burst signals in phase in two horizontal synchronizing signal cycles, the output signal of the VXO 12 is not oscillated by bursts differing by 90 degrees every 1H.

Thus, the APC detection output signal has either signal (a) or (b) in Fig. 3 applied to the VXO 12.

The operation according to this embodiment will next be illustrated using a specific example.

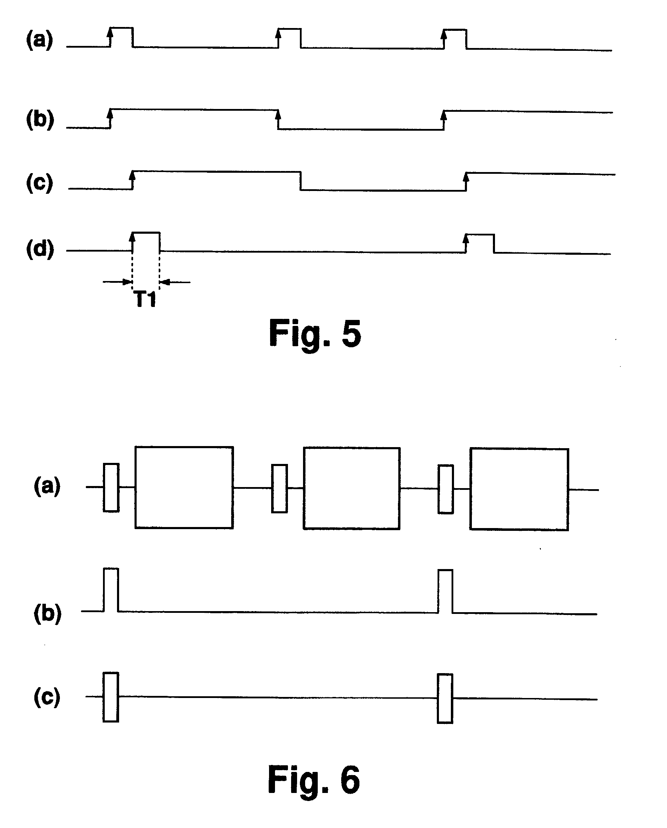

It is assumed that the horizontal synchronizing signal of Fig. 5 (a) is applied to the terminal 9. Then, the 1/2 frequency dividing circuit 15 operates according to the rising of the horizontal synchronizing signal of Fig. 5 (a), and its output signal is as shown by Fig. 5 (b). The signal of Fig. 5 (b) is delayed by the delay circuit 16 as shown in Fig. 5 (c). The mono-multi 17 generates a pulse with a given width as shown in Fig. 5 (d) according to the leading edge of the signal of Fig. 5 (c). The pulse of Fig. 5 (d) is a BGP (burst gate pulse).

A delay time of the delay circuit 16 and a pulse width of the mono-multi 17 are determined by the BGP timing. Comparison of Fig. 5 (a) and Fig. 5 (d) clarifies that a BGP generates in two horizontal synchronizing signal cycles in Fig. 5 (d). Therefore, the burst signal is generated in two horizontal synchronizing signal cycles from the burst gate circuit 11. At that point, the burst signal being generated from the gate circuit for 1/2 frequency dividing of the burst signal is either B1 or B2. If the burst signal is not applied, the APC detection circuit 13 merely maintains its value at that point, so that either B1 or B2 can be controlled by the burst.

Fig. 6 shows the operation of the burst gate circuit 11 of Fig. 4. Fig. 6 (a) shows a chroma signal applied to the burst gate circuit 11. Fig. 6 (b) shows a burst gate signal applied to the burst gate circuit 11. The burst signal of Fig. 6 (a) is extracted by the burst gate signal of Fig. 6 (b). Consequently, the signal of Fig. 6 (c) is applied to the APC detection circuit 13.

The compared result based on either burst may be outputted from the APC detection circuit 13 in various ways. For example, the operation of the APC detection circuit (13) may be stopped directly according to the pulse of Fig. 5 (d). And, the pulse of Fig. 5 (d) may be prepared in various ways.

## Claims

1. A chroma signal recording circuit which oscillates a voltage control oscillator in synchronization with the phase of a burst signal contained in a chroma signal of a PAL video signal and records the chroma signal according to an oscillation output signal of the voltage control oscillator, comprising:
a burst gate circuit which extracts the burst signal from the chroma signal of the video signal;
a voltage control oscillator which oscillates with a frequency that is an integral multiple of the frequency of the burst signal as a central frequency;
an APC detection circuit which compares the phase of the oscillation output signal outputted from the voltage control oscillator with that of the burst signal outputted from the burst gate circuit, and controls an oscillation frequency of the voltage control oscillator according to the phase difference obtained; and
a control circuit which generates the output signal from the APC detection circuit in two horizontal synchronizing signal cycles.

2. The chroma signal recording circuit according to claim 1, wherein the control circuit controls the burst signal output from the burst gate circuit to the APC detection circuit to two horizontal synchronizing signal cycles.

3. The chroma signal recording circuit according to claim 1 or 2, wherein the control circuit comprises:
a frequency dividing circuit which performs 1/2 frequency division of a horizontal synchronizing signal;
a delay circuit which delays the frequency-divided signal from the frequency dividing circuit by time corresponding to the duration from a start position of the horizontal synchronizing signal to a starting position of the burst signal superimposed; and
a gate pulse generating circuit which produces, from the frequency-divided signal delayed by the delay circuit, a gate pulse signal for allowing the output from the APC detection circuit or the output of the burst signal from the burst gate circuit in two horizontal synchronizing signal cycles.

4. The chroma signal recording circuit according to claim 3, wherein the gate pulse generating circuit is a multi-vibrator.
